# EUROPEAN PATENT APPLICATION

(11) **EP 2 009 883 A1**
(43) Date of publication of application: **31.12.2008**
(21) Application number: 08386013.0
(22) Date of filing: 25.06.2008
(51) Int. Cl.: H04M 1/663, H04M 1/57

(54) **A device method and system for handling incoming calls**

(30) Priority: 25.06.2007 US 767585
(71) Applicant: Emblaze Mobile Ltd., 43662 Industrial Area Ra'anana (IL)
(72) Inventor: Reifman, Eli, Ra'anana, 43662 (IL)
(74) Representative: Masoulas, Athanasios V.

(57) **Abstract**

According to some embodiments of the present invention there is provided a communication device including a call handling unit adapted to handle a given incoming call (i.e. voice calls, video calls, sms, etc..) based on a device operation profile (e.g. general, meeting, silent, outdoor, etc..) and based on an exception parameter associated with an identifier of the given call. The exception parameter may be stored as part of the device operation profile or the exception parameter may be stored as part of contact data associated with the identifier of the given call.

## Description

### TECHNICAL FIELD

The present invention relates generally to the field of communication. More specifically, the present invention relates to a device, system and method for handling incoming calls.

### BACKGROUND

In recent decades, electronic technology, including communication technology, has revolutionized our everyday lives. Electronic devices such as POA's, cell phones, mobile media players and digital cameras have permeated the lives of almost every person living in the developed world - and quite a number of people living in undeveloped countries. Mobile communication and computing devices, especially, have become the means by which countless millions conduct their personal and professional interactions with the world. It has become almost impossible for many people, especially those in the business world, who use these devices as a means to improve productivity, to function without access to their electronic devices.

However, with this tremendous proliferation in the use of electronic communication devices, there has developed a need for users to filter incoming calls.

### SUMMARY

According to some embodiments of the present invention there is provided a communication device including a call handling unit adapted to handle a given incoming call (i.e. voice calls, video calls, sms, etc.. ) based on a device operation profile (e.g. general, meeting, silent, outdoor, etc.. ) and based on an exception parameter associated with an identifier of the given call. The exception parameter may be stored as part of the device operation profile or the exception parameter may be stored as part of contact data associated with the identifier of the given call.

The communication device may include a profile manager module adapted to store in a digital memory one or more device operation profiles (e.g. general, meeting, silent, outdoor, etc.. ). The profile manager module may be adapted to allow a user of the communication device to define, customize and select device operation profiles to be used by the call handling unit in handling incoming calls.

The communication device may also include a contact manager module adapted to store in a digital memory one or more contact data files (e.g. Mom, Dad, Office, Bill Williams, etc..). The contact manager module may be adapted to allow a user of the communication device to define, customize and select contact data files, which files may be used by the call handling unit in handling incoming calls. The contact manager module may also be adapted to allow a user to define groups of contact data files.

The call handling unit is adapted to determine with which alerts (i.e. sounds, images or vibrations), if any, the communication device should attempt to alert a device user of an incoming call. As a given call is received by the communication device, the call handling unit may receive an identifier of the given call and may check whether the given identifier is associated with an exception parameter. If the given identifier is not associated with an exception parameter, the call handling unit may cause the communication device to attempt to alert the device user based on alerts indicated within a current or active device operation profile. If, however, the given identifier is associated with an exception parameter, the call handling unit may cause the communication device to attempt to alert the device user based on alerts associated with the exception parameter.

According to embodiments of the present invention where the exception parameter is associated with the device operation profile, each operation profile may include: (1) one or a set of default operation profile specific call handling parameters, and (2) one or more exceptions lists, wherein each of the one or more exception lists may be associated with one or a set of exception call handling parameters. The exception list may include one or a set of identifiers, wherein each identifier may be associated with a contact data file or with a contact data files group. The exception list may also include one or a set of exception call handling parameters indicating how the call handling unit should handle an incoming call whose identifier corresponds to an identifier stored in the exception list. Each device operation profile may include more than one exceptions list, where each exceptions list may be associated with a different set of identifiers and call exception handling parameters.

According to embodiments of the present invention where the exception parameter is associated with a contact data file or with a contact data files group, each contact data file or contact data files group may include: (1) one or a set of contact/group specific call handling parameters, and optionally (2) a list of operation profiles whose default operation profile specific call handling parameters may be overridden. According to further embodiments of the present invention, each operation entry in the list may include call handling parameters to be used when overriding the default operation profile specific call handling parameters associated with that entry.

According to yet further embodiments of the present invention, each operation profile and each contact data file or contact data file group may have an associated override priority value. According to these embodiments of the present invention, when the call handling unit received an identifier of an incoming call, it may use call the handling parameters defined by the contact data file or contact data file group when the override priority value of the contact data file or contact data file group is greater than override priority value of the operation profile.

### BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

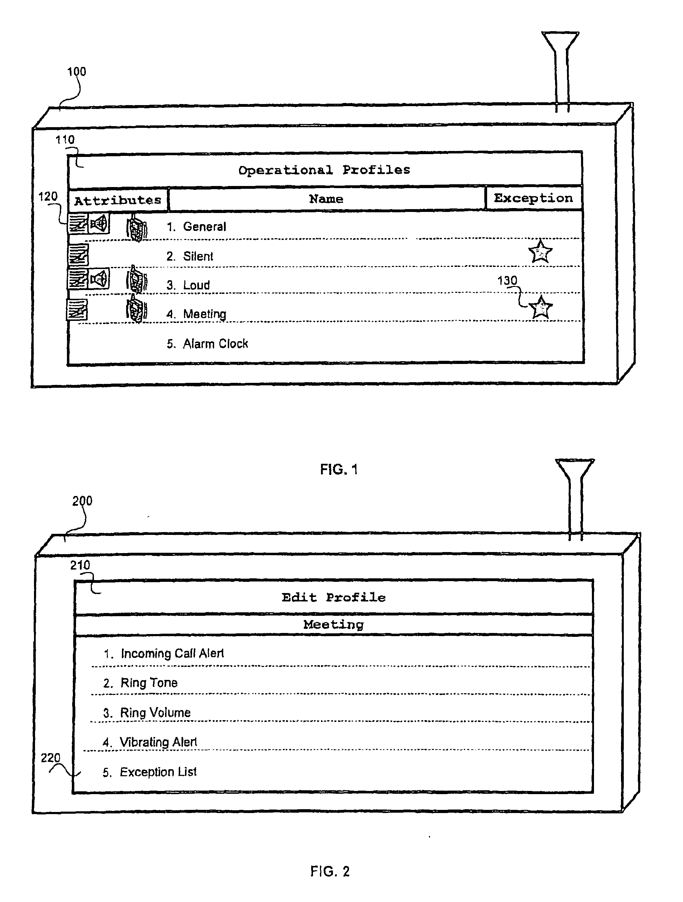

Fig. 1 is a diagram of an exemplary communication device with its display showing a list of operational profiles, and wherein there is an indicator of which operational profiles include exceptions;
Fig. 2 is a diagram of an exemplary communication device with its display showing a list of settings for a specific operational profile (i.e. meeting operational profile), and wherein an attribute of the operational profile is an exception is an exception list which may be populated with contact data files and/or group data files;

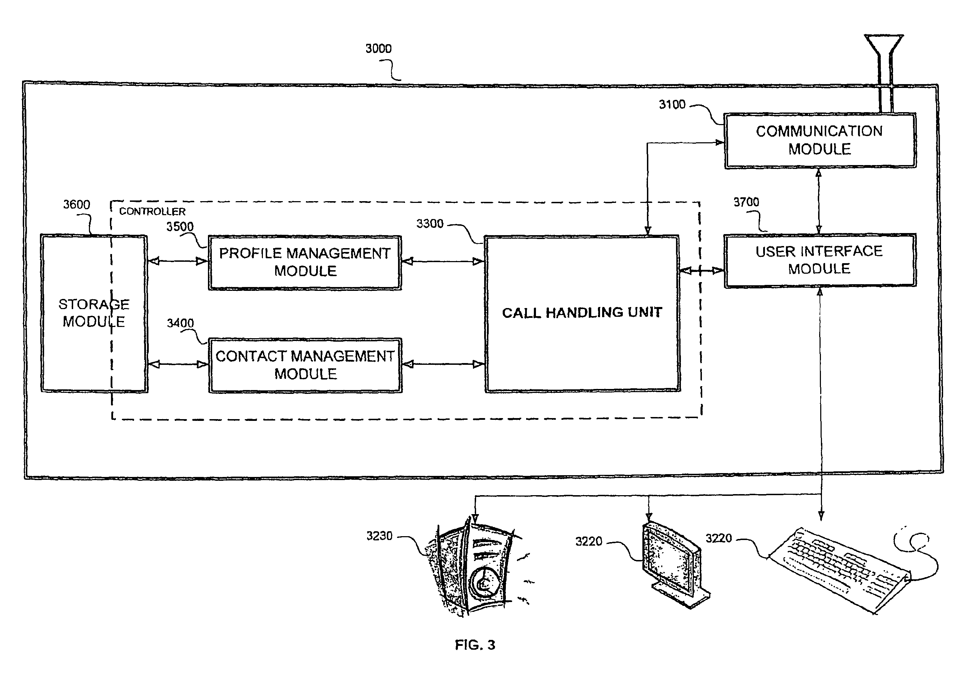

Fig. 3 is a block diagram of an exemplary communication device according to some embodiments of the present invention, wherein a call handling unit may be adapted to trigger an alert of a given incoming call based on a current operational profile and based on one or more exception settings which may be applicable to the given incoming call;

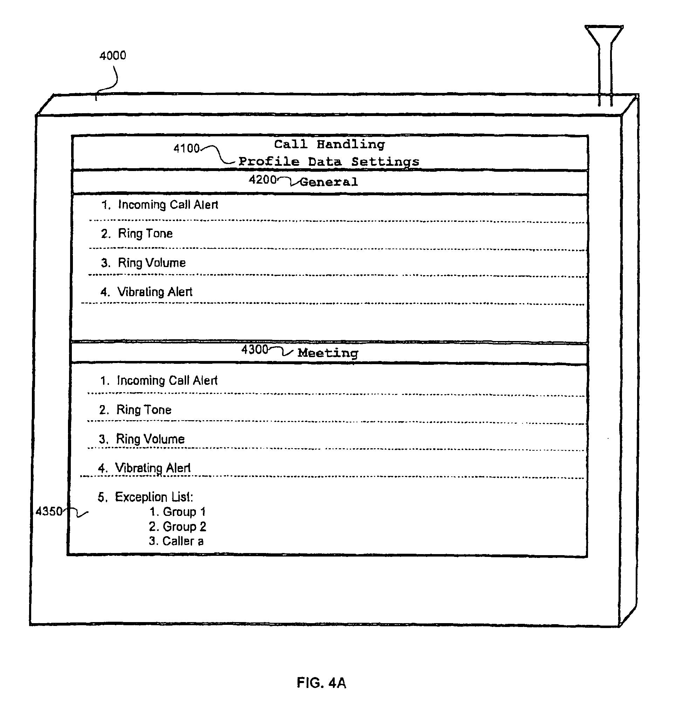

Fig. 4A is a diagram of an exemplary communication device with its display showing a list of operational profile settings, wherein the profile settings include an attribute of an exception list, wherein the second list of profile settings (i.e. Meeting Profile) includes an exception list consisting of contact data files and/or group data files, and wherein the first list of profile settings (i.e. Meeting Profile) does not;

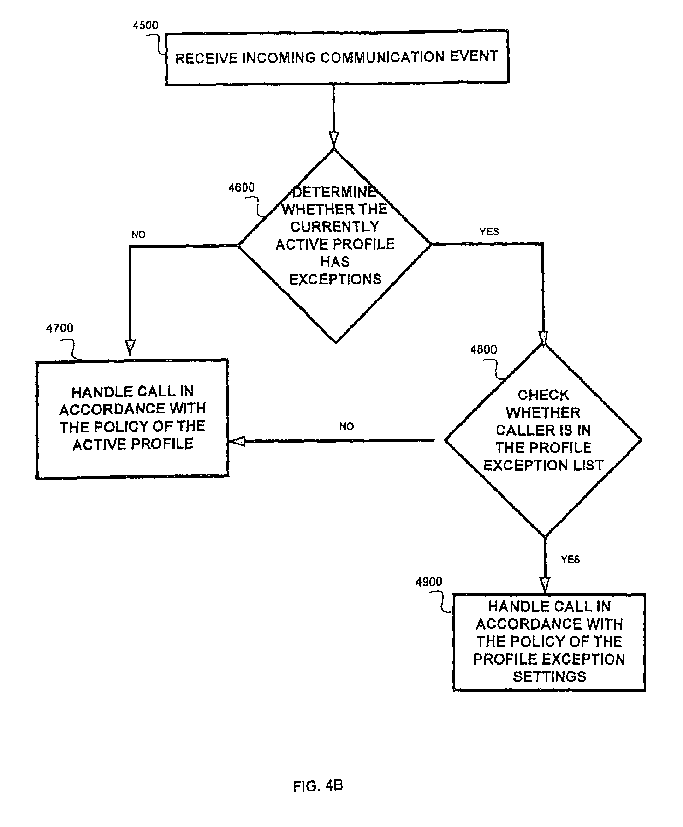

Fig. 4B is a flow chart depicting the steps of an exemplary embodiment of the present invention which may be executed by a call handling unit in accordance with some embodiments of the present invention such that an incoming call is handled based on an exception list associated with the currently active profile;

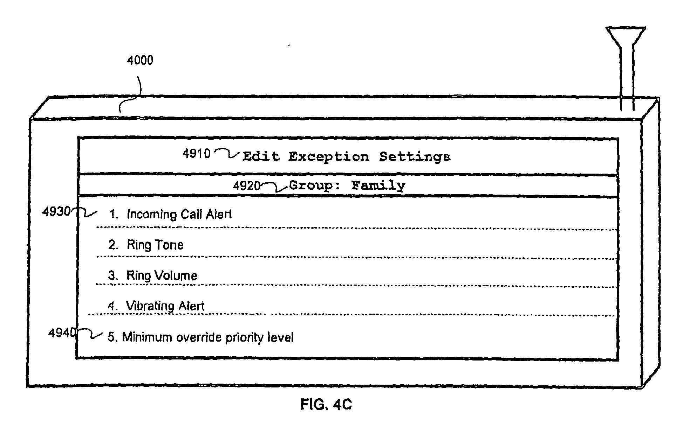

Fig. 4C is a diagram of an exemplary communication device with its display showing a list of exception alert settings associated with a contact group data file, and wherein the list further Includes an override priority level value which may used by a call handling unit to determine when to override an active operation profile's alert settings;

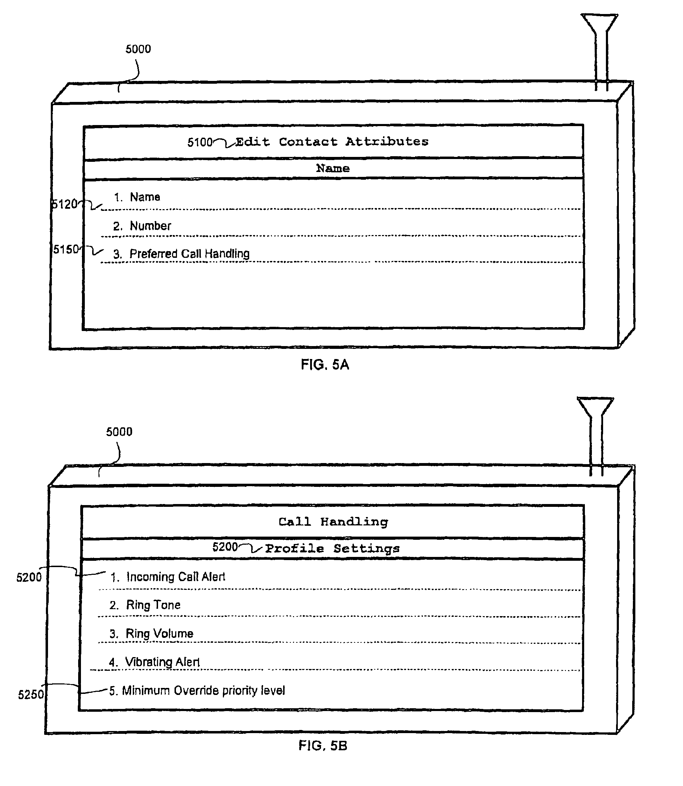

Fig. 5A is a diagram of an exemplary communication device with its display showing the attributes of a contact data file, wherein the attributes include a preferred call handling attribute;
Fig. 5B is a diagram of an exemplary communication device with its display showing a profile's call handling settings, wherein the call handling settings Include an attribute of override priority;

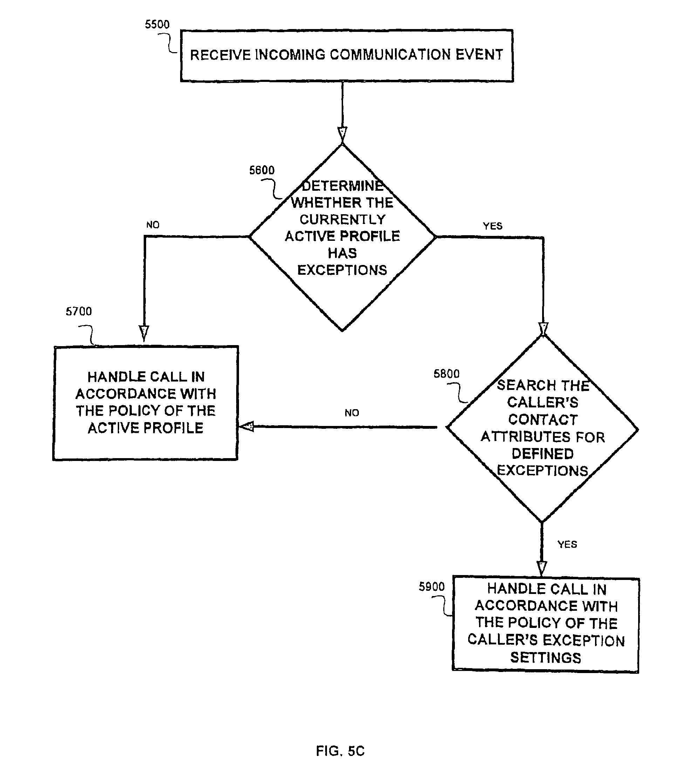

Fig. 5C is a flow chart depicting the steps of an embodiment of the present invention which may be executed by a call handling unit to trigger an alert of an incoming call based on an exception list of the currently active profile and the exception settings associated with the caller data file;

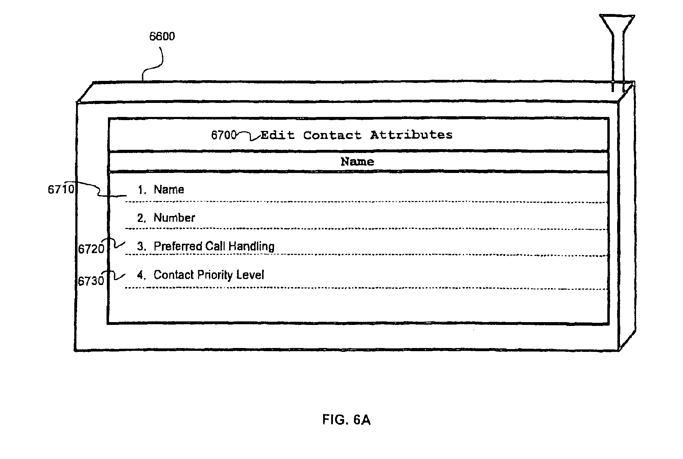

Fig. 6A is a diagram of an exemplary communication device with its display showing the attributes of a contact data file, wherein the attributes include a preferred call handling attribute and an override priority parameter; and

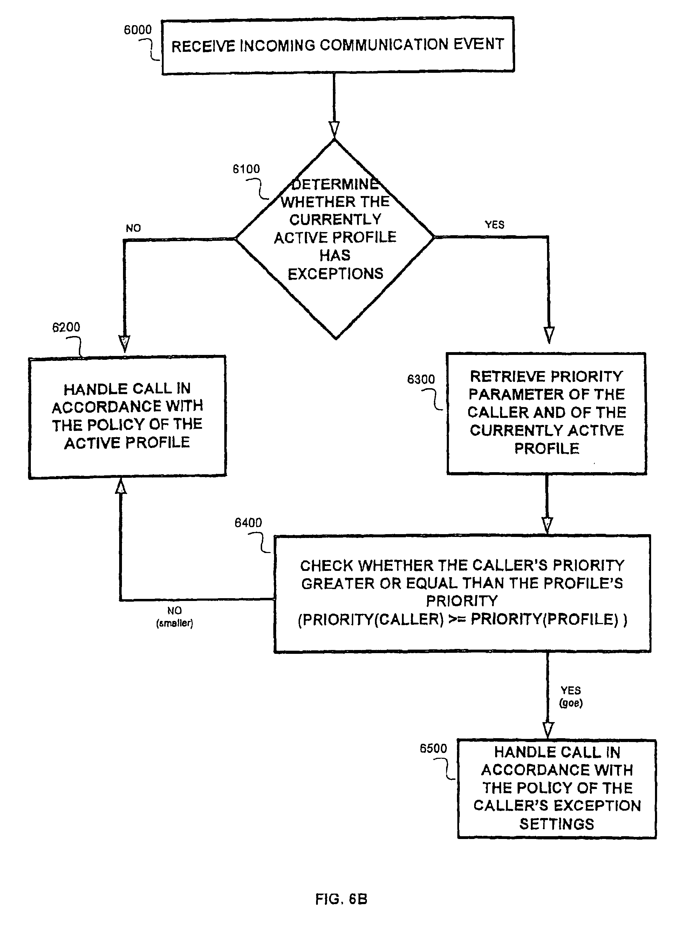

Fig. 6B is a flow chart depicting the steps of an embodiment of the present invention which may be executed by a call handling unit to trigger an alerting of an incoming call based on a comparison an override priority parameter associated with the caller data file and an override priority parameter associated with the currently active profile.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION

In the following detailed description, numerous specific details are set forth in order to provide a thorough understanding of the invention. However, it will be understood by those skilled in the art that the present invention may be practiced without these specific details. In other instances, well-known methods, procedures, components and circuits have not been described in detail so as not to obscure the present invention.

Unless specifically stated otherwise, as apparent from the following discussions, it is appreciated that throughout the specification discussions utilizing terms such as "processing", "computing", "calculating", "determining", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

According to some embodiments of the present invention there is provided a communication device including a call handling unit adapted to handle a given incoming call (I.e. voice calls, video calls, sms, etc..) based on a device operation profile (e.g. general, meeting, silent, outdoor, etc..) and based on an exception parameter associated with an identifier of the given call. The exception parameter may be stored as part of the device operation profile or the exception parameter may be stored as part .of contact data associated with the identifier of the given call.

The communication device may include a profile manager module adapted to store in a digital memory one or more device operation profiles (e.g. general, meeting, silent, outdoor, etc..). The profile manager module may be adapted to allow a user of the communication device to define, customize and select device operation profiles to be used by the call handling unit in handling incoming calls.

The communication device may also include a contact manager module adapted to store in a digital memory one or more contact data files (e.g. Mom, Dad, Office, Bill Williams, etc..). The contact manager module may be adapted to allow a user of the communication device to define, customize and select contact data files, which files may be used by the call handling unit in handling incoming calls. The contact manager module may also be adapted to allow a user to define groups of contact data files. The call handling unit is adapted to determine with which alerts (i.e., sounds, images or vibrations), if any, the communication device should attempt to alert a device user of an incoming call. As a given call is received by the communication device, the call handling unit may receive an identifier of the given call and may check whether the given identifier is associated with an exception parameter. If the given identifier is not associated with an exception parameter, the call handling unit may cause the communication device to attempt to alert the device user based on alerts indicated within a current or active device operation profile. If, however, the given identifier is associated with an exception parameter, the call handling unit may cause the communication device to attempt to alert the device user based on alerts associated with the exception parameter.

According to embodiments of the present invention where the exception parameter is associated with the device operation profile, each operation profile may include: (1) one or a set of default operation profile specific call handling parameters, and (2) one or more exceptions lists, wherein each of the one or more exception lists may be associated with one or a set of exception call handling parameters. The exception list may include one or a set of identifiers, wherein each identifier may be associated with a contact data file or with a contact data files group. The exception list may also include one or a set of exception call handling parameters indicating how the call handling unit should handle an incoming call whose identifier corresponds to an identifier stored in the exception list. Each device operation profile may include more than one exceptions list, where each exceptions list may be associated with a different set of identifiers and call exception handling parameters.

According to embodiments of the present invention where the exception parameter is associated with a contact data file or with a contact data files group, each contact data file or contact data files group may include: (1) one or a set of contact/group specific call handling parameters, and optionally (2) a list of operation profiles whose default operation profile specific call handling parameters may be overridden. According to further embodiments of the present invention, each operation entry in the list may include call handling parameters to be used when overriding the default operation profile specific call handling parameters associated with that entry.

According to yet further embodiments of the present invention, each operation profile and each contact data file or contact data file group may have an associated override priority value. According to these embodiments of the present invention, when the call handling unit received an identifier of an incoming call, it may use call the handling parameters defined by the contact data file or contact data file group when the override priority value of the contact data file or contact data file group is greater than override priority value of the operation profile.

Turning now to Fig. 1 there is shown a diagram of an exemplary communication device 100 with its display showing a list of operational profiles 110, and wherein there is an indicator of which operational profiles include exceptions.

According to some embodiments of the present invention, the operational profiles are a set of editable working modes of the device. According to some embodiments of the present invention, the operational profiles may consist of the operational profiles names, attributes (120) and an indicator showing whether the profile has an exception (130).

Turning now to Fig. 2, there is shown a diagram of an exemplary communication device 200 with its display showing a list of profile settings ("Edit profile" menu 210), and wherein there is an attribute of the profile settings of an exception list 220, which exception list may be populated with contact data files and/or with group data files.

According to some embodiments of the present invention, the profile settings attributes may consist. According to some further embodiments of the present invention, the settings (i.e. incoming call alert, ring tone, ring volume, vibrating alert, and exception list) may be configurable and/or edited by the user. According to further embodiments of the present invention, the settings configuration may change and/or define the operational profiles 110 described herein above.

Turning now to Fig. 3, there is shown a block diagram of a communication device 3000 with a call handling unit 3300 adapted to alert an incoming call based on a variety of exception settings in accordance with some embodiments of the present invention. The functionality of the block diagram depicted in Fig.3 may best be described in conjunction with Figs. 4A, 4B, 5A, 5B, 5C, 6A and 6B.

Turning now to Fig. 4A there is shown a diagram of an exemplary communication device 4000 with its display showing a list of profile settings 4100, wherein the profile setting 4300 has an attribute of an exception list 4350, which exception list may consist of contact data files and/or group data files.

According to some embodiments of the present invention, an operational profile (i.e. general 4200, meeting 4300) may include: (1) one or a set of default operation profile specific call handling parameters (4250), and (2) one or more exceptions lists (4350), wherein each of the one or more exception lists may be associated with one or a set of exception call handling parameters. The exception list may include one or a set of identifiers, wherein each identifier may be associated with a contact data file ("caller") or with a contact data files group. The exception list may also include one or a set of exception call handling parameters indicating how the call handling unit should handle an incoming call whose identifier corresponds to an identifier stored in the exception list. Each device operation profile may include more than one exceptions list, where each exceptions list may be associated with a different set of identifiers and call exception handling parameters.

Turning now to Fig. 4B is a flow chart depicting the steps of an embodiment of the present invention, wherein the call handling unit 3300 is adapted to alert an incoming call based on an exception list 4350 associated with the currently active profile.

According to some embodiments of the present invention, a communication module 3100 may be adapted to receive an incoming communication event (step 4500). According to some embodiments of the present invention, a communication event may be a cellular communication session, a VoIP session and/or any other method of communication known today or to be devised in the future.

According to some embodiments of the present invention, as a given call is received by the communication device, call handling unit 3300 may receive an identifier of the given call from communication module 3100.

According to some embodiments of the present invention, call handling unit 3300 is adapted to determine with which alerts (i.e. sounds, images or vibrations), if any, the communication device should attempt to alert a device user of an incoming call.

According to some embodiments of the present invention, call handling unit 3300 may retrieve data from the profile manager module 3500 and determine whether the currently active profile has exceptions and/or an exception list (step 4600). According to some embodiments of the present invention, call handling unit 3300 may be adapted to handle a given incoming call (i.e. voice calls, video calls, sms, etc.. ) based on a device operation profile (e.g. general, meeting, silent, outdoor, etc..).

According to some embodiments of the present invention, if the currently active profile has exceptions and/or an exception list the call handling unit may retrieve additional data from the profile manager module 3500 and check whether the caller identifier is in the exception list of the currently active profile (step 4800).

According to some embodiments of the present invention, profile manager module 3500 may be adapted to store in a storage module 3600 one or more device operation profiles (e.g. general, meeting, silent, outdoor, etc..). The profile manager module may be adapted to allow a user of the communication device to define, customize and select device operation profiles to be used by the call handling unit in handling incoming calls.

According to some embodiments of the present invention, the data retrieved from the profile manager module 3500 may include: (1) one or a set of default operation profile specific call handling parameters, (2) one or more exceptions lists, wherein each of the one or more exception lists may be associated with one or a set of exception call handling parameters and (3) any other attribute of a contact data file and/or group data file.

According to further embodiments of the present invention, an exception list may include one or a set of identifiers, wherein each identifier may be associated with a contact data file or with a contact data files group. The exception list may also include one or a set of exception call handling parameters indicating how the call handling unit should handle an incoming call whose identifier corresponds to an identifier stored in the exception list. Each device operation profile may include more than one exceptions list, where each exceptions list may be associated with a different set of identifiers and call exception handling parameters.

According to some embodiments of the present invention, if the caller identifier ("caller") is a member of the exception list of the currently active profile, call handling unit 3300 may cause the communication device to attempt to alert the device user based on alerts associated with the exception parameters (step 4900).

According to some embodiments of the present invention, if the caller is not a member of the exception list of the currently active profile, call handling unit 3300 may cause the communication device to attempt to alert the device user based on alerts associated with the call handling settings of the current or active device operation profile (step 4700).

Turning now to Fig. 4C, there is shown a diagram of an exemplary communication device 4000 with its display showing a list of exception settings 4910, wherein the exception settings are associated with a contact group data file 4920.

According to some embodiments of the present invention, the exception setting may consist of parameters and definitions of a call handling mode. According to some embodiments of the present invention, call handling mode may consist of: (1) type of incoming call alert, (2) ring tone, (3) ring volume and (4) vibrating alert.

Turning now to Fig. 5A, there is shown a diagram of an exemplary communication device 5000 with its display showing the attributes of a contact data file 5100, wherein the attributes consist of a preferred call handling attribute 5150.

Turning now to Fig. 5B, there is shown a diagram of an exemplary communication device 4000 with its display showing a list of a profile's call handling settings 5200, wherein the call handling settings consist of an attribute of minimum override priority level 5250.

Turning now to Fig. 5C, there is shown a flow chart depicting the steps of an embodiment of the present invention, wherein the call handling unit 3300 is adapted to alert an incoming call based on an exception list of the currently active profile and the exception settings associated with the caller data file.

According to some embodiments of the present invention, a communication module 3100 may be adapted to receive an incoming communication event (step 5500).

According to some embodiments of the present invention, as a given call is received by the communication device, call handling unit 3300 may receive an identifier associated with the caller from communication module 3100.

According to some embodiments of the present invention, call handling unit 3300 is adapted to determine with which alerts (i.e. sounds, images or vibrations), if any, the communication device should attempt to alert a device user of an incoming call.

According to some embodiments of the present invention, call handling unit 3300 may retrieve data (i.e. exception indicator) from profile manager module 3500 and determine whether the currently active profile has exceptions (step 5600). According to some embodiments of the present invention, call handling unit 3300 may be adapted to handle a given incoming call (i.e. voice calls, video calls, sms, etc..) based on a device operation profile (e.g. general, meeting, silent, outdoor, etc.. ).

According to some embodiments of the present invention, call handling unit may retrieve additional data from the profile manager module 3500, which additional data may comprise of the profile's call handling settings (5200) as described hereinabove in Fig. 5A and Fig. 5B. According to yet further embodiments of the present invention, profile settings may consist of the following attributes: (1) type of incoming call alert, (2) ring tone, (3) ring volume, (4) vibrating alert and (5) minimal overriding priority level (5250).

According to some embodiments of the present invention, if the currently active profile has exceptions, call handling unit is adapted to retrieve data from the contact management module 3400 (step 5800), which data may comprise of the contact's call handling settings (5200) as described hereinabove in Fig. 5A and Fig. 5B. According to yet further embodiments of the present invention, contact's settings may consist of the following attributes: (1) type of incoming call alert, (2) ring tone, (3) ring volume, (4) vibrating alert and (5) minimal overriding priority level (5250).

According to further embodiments of the present invention, contact manager module 3400 may be adapted to store in a storage module 3600 one or more contact data files (e.g. Mom, Dad, Office, Bill Williams, etc..). The contact manager module may be adapted to allow a user of the communication device to define, customize and select contact data files, which files may be used by the call handling unit in handling incoming calls. The contact manager module may also be adapted to allow a user to define groups of contact data files.

According to some embodiments of the present invention, a contact data file attributes (5120) may consist of: (1) name, (2) number, (3) preferred call handling mode (5150), which preferred call handling mode attribute may be associated with a profile's settings and/or may call handling settings as described hereinabove.

According to some embodiments of the present invention, if the caller's contact attributes consist the attribute of a preferred call handling ("exception settings"), call handling unit 3300 may cause the communication device to attempt to alert the device user based on alerts associated with the exception parameters of the caller (step 5900).

According to some embodiments of the present invention, if the caller's contact attributes don't consist a preferred call handling ("exception settings") attribute, call handling unit may cause the communication device to attempt to alert the device user based on alerts associated with the current or active device operation profile (step 5700).

Turning now to Fig. 6A, there is shown a diagram of an exemplary communication device 6600 with its display showing the attributes of a contact data file 6700, wherein the attributes 6710 consist of a preferred call handling attribute 6720 and a minimum override priority parameter 6730. According to further embodiments of the present invention, attributes of a contact data file (6710) may consist of: (1) name, (2) number, (3) preferred call handling mode (6720) and (4) contact priority level (6730).

Turning now to Fig. 6B, there is shown a flow chart depicting the steps of an embodiment of the present invention, wherein call handling unit 3300 is adapted to alert an incoming call based on a comparison between an override priority parameter associated with the caller data file 6730 and an override priority parameter associated with the currently active profile 5250.

According to some embodiments of the present invention, a communication module 3100 may be adapted to receive an incoming communication event (step 6000).

According to some embodiments of the present invention, as a given call is received by the communication device, call handling unit 3300 may receive an identifier associated with the caller from communication module 3100.

According to some embodiments of the present invention, call handling unit 3300 may be adapted to determine with which alerts (i.e. sounds, images or vibrations), if any, the communication device should attempt to alert a device user of an incoming call.

According to some embodiments of the present invention, call handling unit 3300 may retrieve data from the profile manager module 3500 and determine whether the profile has exceptions associated with it (step 6100). According to some embodiments of the present invention, call handling unit 3300 may be adapted to handle a given incoming call (i.e. voice calls, video calls, sms, etc..) based on a device operation profile (e.g. general, meeting, silent, outdoor, etc..).

According to some embodiments of the present invention, call handling unit 3300 may retrieve additional data from the profile manager module 3500, which additional data may comprise of the profile's call handling settings (5200) as described hereinabove in Fig. 5A and Fig. 5B.

According to yet further embodiments of the present invention, profile settings may consist of the following attributes: (1) type of incoming call alert, (2) ring tone, (3) ring volume, (4) vibrating alert and (5) minimal overriding priority level (5250).

According to some embodiments of the present invention, call handling unit is adapted to retrieve data from the contact management module 3400 (step 6200), which data may consist of the attributes of a contact data file as described herein above in Fig. 6A, specifically the retrieved data may consist of the contact's priority level 6730.

According to some embodiments of the present invention, call handling unit may compare (1) the priority level associated with the currently active profile 5250 with (2) the caller's priority level 6730. According to yet further embodiments of the present invention, call handling unit may determine with which alerts (i.e. sounds, images or vibrations), if any, the communication device should attempt to alert a device user of an incoming call based on the results of this comparison (step 6400).

According to some embodiments of the present invention, if the override priority value ("priority level") of the contact data file 6730 or contact data file group 4940 is greater than the override priority value of the currently active profile 5250, call handling unit may cause the communication device to attempt to alert the device based on alerts associated with the contact data file or contact data file group (step 6500).

According to yet further embodiments of the present invention, if the override priority value ("priority level") of the contact data file 6730 or contact data file group 4940 is less than the override priority value of the currently active profile 5250, call handling unit may cause the communication device to attempt to alert the device user based on alerts associated with the currently active profile (step 6200).

While certain features of the invention have been illustrated and described herein, many modifications, substitutions, changes, and equivalents will now occur to those skilled in the art. It is, therefore, to be understood that the appended claims are intended to cover all such modifications and changes as fall within the true spirit of the invention.

## Claims

1. A communication device comprising:
a contact management unit for defining a contact having an identifier;
a profile management unit for defining an operation profile for the communication device, the profile comprising an exception list comprising the contact;
a call handling unit adapted to handle an incoming call associated with a particular identifier, based on the operation profile and based on whether the particular identifier associated with the incoming call is equal to the particular identifier.

2. The device according to claim 1, wherein the call handling unit is further adapted to determine whether the operation profile has an exception list.

3. The device according to claim 1, wherein the call handling unit is further adapted to determine whether the particular identifier is in an exception list of the operation profile.

4. The device according to claim 1, wherein the call handling unit is further adapted to determine whether a priority value associated with the particular identifier is higher than a priority value associated with the operation profile.

5. The device according to claim 1, wherein the incoming call is handled according to a definition associated with the operation profile.

6. The device according to claim 1, wherein the incoming call is handled according to a definition associated with the contact data.

7. The device according to claim 1 further comprising a storage device for storing the contact and the operation profile.

8. The device according to claim 1 further comprising a communication device for receiving an incoming communication event.

9. The device according to claim 1 wherein the contact management unit is further adapted to store information associated with the contact, and wherein the profile management unit is further adapted to store information associated with the profile.

10. A method for handling an incoming call by a communication device, the communication device operating in an active profile, the method comprising:
receiving the incoming call from a contact, the contact having an identifier;
determining whether the active profile comprises an exception contact list;
if the active profile does not comprise an exception contact list, handling to call based on the profile definition; and
if the active profile comprises an exception contact list, determining according to the identifier associated with the contact whether the contact is in the exception contact list of the profile.

11. The method of claim 10 further comprising the steps of:
if the contact is in the exception contact list of the profile, handling the call based on a definition associated with the contact definition; and
if the contact is not in the exception contact list of the profile, handling the call based on a definition associated with the profile.

12. The method of claim 10 wherein the identifier is a caller number or a name associated with the caller number.

13. The method of claim 10 further comprising the steps of:
retrieving a priority value associated with the contact;
retrieving a priority value associated with the active profile; and
comparing the priority value associated with the contact and the priority value associated with the active profile.

14. The method of claim 13 further comprising the steps of:
if the priority value of the contact is higher than or equal to the priority value of the active profile, handling the call based on a definition associated with the contact; and
if the priority value of the contact is lower than the priority value of the active profile, handling the call based on a definition associated with the profile.
